(19) Europäisches Patentamt
European Patent Office
Office européen des brevets

(11) Publication number : 0 310 059 B1

(12) # EUROPEAN PATENT SPECIFICATION

(45) Date of publication of patent specification : **13.09.95 Bulletin 95/37**

(51) Int. Cl.[6] : **G11B 7/24**

(21) Application number : **88116058.4**

(22) Date of filing : **29.09.88**

(54) **Optical information recording medium.**

(30) Priority : **29.09.87 JP 245288/87**

(43) Date of publication of application : **05.04.89 Bulletin 89/14**

(45) Publication of the grant of the patent : **13.09.95 Bulletin 95/37**

(84) Designated Contracting States : **CH DE FR GB LI NL**

(56) References cited :
**EP-A- 347 183**
**EP-A- 0 147 083**
**EP-A- 0 182 946**
**EP-A- 0 304 050**
**PATENT ABSTRACTS OF JAPAN vol. 9, no. 50 (P-339)(1773) 05 March 1985, & JP-A- 59 188854 (TDK K.K.) 26 October 1984,**
**PATENT ABSTRACTS OF JAPAN vol. 9, no. 50 (P-339)(1773) 05 March 1985, & JP-A- 59 188853 (TDK K.K.) 26 October 1984,**

(73) Proprietor : **FUJI PHOTO FILM CO., LTD.**
**210 Nakanuma**
**Minami-Ashigara-shi**
**Kanagawa 250-01 (JP)**

(72) Inventor : **Inagaki, Yoshio**
**210, Nakanuma**
**Minami Ashigara-shi Kanagawa (JP)**
Inventor : **Adachi, Keiichi**
**210, Nakanuma**
**Minami Ashigara-shi Kanagawa (JP)**
Inventor : **Yabe, Masao**
**200, Ohnakazato**
**Fujinomiya-shi Shizuoka-ken (JP)**

(74) Representative : **Patentanwälte Dr. Solf & Zapf**
**Candidplatz 15**
**D-81543 München (DE)**

EP 0 310 059 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Field of the Invention

The present invention relates to an optical information recording medium of heat mode type having an organic dye thin film wherein recording and readout are carried out by causing state change by high density energy beam.

### Background of the Invention

Heretofore, information recording media wherein recording and readout of information are carried out by irradiating a rotating disc-shaped information recording medium with a laser beam have been known. As recording layers in these information media, those wherein metals having low melting points and dielectric substances are used are proposed. However, these recording layers have disadvantages such as poor preservability, low separating ability, low recording density and high manufacturing cost. Recently, it has been proposed and practiced that dye films whose physical properties may be changed with light of relatively long wavelengths are used in recording layers. However, dyes which have absorption bands in long wavelengths generally have such problems that they are low in stability against heat and light. Thus, it is the present state of things that recording layers having recording characteristics which are stable over a long period have not yet been developed.

On the other hand, a compact disc (CD) has been widely and practically used for readout of audio such as music.

A compact disc is generally composed of a plastic disc-shaped transparent support wherein pits containing EFM (Eight to Fourteen Modulation) digital audio signal information such as CD format signal have been formed in advance, a reflective thin film made of Al and a protective film, provided thereon respectively. Readout of the information from CD is carried out by irradiation of optical disc with a laser beam. CD format signal is read out by change in reflectance owing to the presence or absence of pits.

CD is required based on CD standard to have a recording time of maximum 74 minutes in the range of a signal surface inside diameter of 45 mm and a signal surface outside diameter of 116 mm and in a pit width of 0.8 micrometer and a track pitch of 1.6 micrometers when recording is carried out by rotating the CD at a constant linear velocity of 1.2 to 1.4 m/sec. Heretofore, such compact discs for audio have been those only for readout wherein pits had been formed in advance on the support, and thus have had a disadvantage that recording, editing and the like of information cannot be made. Therefore, development of DRAW (Direct Read After Write, writable) type CD has been desired.

Further, a DRAW type optical disc for CD-ROM (Read Only Memory) or CD-I (Interactive) has been desired in files such as various documents, data and still pictures.

However, since writable optical information recording media having as a recording layer a dye thin film which have hitherto been known have a low reflectance for the dye thin film, even if information could be recorded therein, the information could not be read out by commercially available CD players in which a high reflectance is required.

As for an optical disc for recording CD format signal, there have been proposed an optical disc which has a recording layer comprising a dye, or a dye composition and wherein recording of CD format signals is made, and a method for recording optical information using the optical disc (J.P. KOKAI Nos. 61-237239, 61-239443, 62-14344 and 62-14345). However, these optical discs have been practically insufficient in recording sensitivity and readout sensitivity.

EP-A-147083 describes photostable cyanine dyes which are incorporated in an optical recording medium.

EP-A-182946 describes optical recording media of the heat mode type which contains in its recording layer cyanine dyes having imidazole rings with an aromatic ring condensed therewith as terminal groups.

EP-A-347183 falls under Art 54(3) EPC and describes dye solutions and processes for the preparation of information recording media which comprise a substrate and a recording layer containing a cyanine dye.

### SUMMARY OF THE INVENTION

Thus, an object of the present invention is to provide optical information recording media having adequate recording characteristics and having a dye recording layer which is capable of maintaining the characteristic over a long period and thus excellent in stability.

Another object of the present invention is to provide an optical information recording medium wherein CD format signals readable by commercially available CD players can be recorded.

The above objects of the present invention have been accomplished by an optical information recording medium for carrying out recording or readout by laser beam which comprises a support having carried thereon a recording layer containing dye(s) represented by the general formula (I):

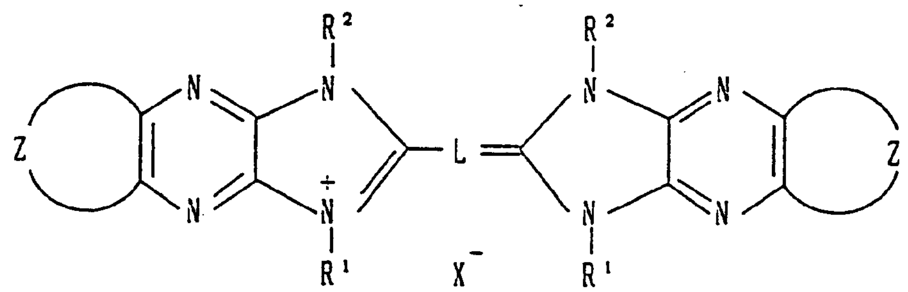

wherein $R^1$ and $R^2$ independently represent substituted or unsubstituted alkyl groups, L represents a linking group formed by linkage of 5-substituted or unsubstituted methine groups through conjugated double bonds, Z represents an atomic group for completing an unsubstituted benzene ring, and $X^-$ represents a halogen ion, $SO_4^{2-}$, $HSO_4^-$, an alkylsulfate ion, a sulfonate ion, a carboxylate ion, $PF_6^-$, $BF_4^-$, $ClO_4^-$, $IO_4^-$, a tungstate ion, a heteropolyacid ion, $H_2PO_4^-$, $NO_3^-$, or a phenolate ion for neutralization of electron charge of the cationic part.

In the general formula (I), $R^1$, $R^2$ and Z may have substituent(s). Preferred ones among the substituents are those having a hydrophobic parameter $\pi$ ranging from -0.5 to 15 as proposed by C. Hansch et al. Hydrophobic parameter can be calculated according to the following literatures:

1) C. Hansch et al., J. Med. Chem. 16, 1207 (1973)

2) C. Hansch et al., ibid. 20, 304 (1977)

Preferred ones among the groups represented by $R^1$ or $R^2$ are substituted or unsubstituted lower alkyl groups (having 1 to 8 carbon atoms), and these substituents may be those having a hydrophobic parameter $\pi$ ranging from -0.5 to 15 as proposed C. Hansch. Particularly preferred substituents when $R^1$ or $R^2$ has substituent(s) are halogen atoms (F, Cl, Br, I), substituted or unsubstituted phenyl groups (for example, phenyl, m-chlorophenyl, p-methylphenyl), alkylthio groups (for example, methylthio, butylthio) and substituted or unsubstituted phenylthio groups (for example, phenylthio, p-chlorophenylthio, m-methylphenylthio).

Particularly preferred ones among the groups represented by $R^1$ or $R^2$ are unsubstituted alkyl groups having 2 to 8 carbon atoms and most preferred ones among them are those wherein $R^1$ and $R^2$ are identical.

Examples of the atomic group represented by Z include atomic groups for completing a benzene ring, a naphthalene ring or an anthracene ring, and preferred examples thereof are atomic groups for completing a benzene ring or a naphthalene ring, and these atomic groups may have substituent(s) above-described as substituents on $R^1$ or $R^2$. Particularly preferred substituents when Z has substituent(s) include halogen atoms (F, Cl, Br, I), substituted or unsubstituted phenyl groups (for example, phenyl, m-chlorophenyl, p-methylphenyl), alkylthio groups (for example, methylthio, butylthio), substituted or unsubstituted phenylthio groups (for example, phenylthio, p-chlorophenylthio, m-methylphenylthio), substituted or unsubstituted alkyl groups (for example, methyl, trifluoromethyl, tert-amyl), a cyano group, alkoxycarbonyl groups (for example, propoxycarbonyl, butoxycarbonyl, benzyloxycarbonyl, decyloxycarbonyl, 2-ethylhexyloxycarbonyl), and alkyl- or arylsulfonyl groups (for example, butanesulfonyl, phenylsulfonyl, octanesulfonyl).

Particularly preferred ones among the atomic groups represented by Z are atomic groups necessary for forming a benzene ring having substituent(s) having a Hammett's sigma constant of -0.2 to +0.7 and thus a relatively weak electron donating property, and among them are further preferable atomic groups for forming a benzene ring substituted by halogen atom(s), i.e. F, Cl, Br or I.

Linking groups represented by L represent substituted or unsubstituted methine groups, or linking groups formed by linkage of 5 substituted or unsubstituted methine groups through conjugated double bonds. Particularly preferred ones among these linking groups are those represented by the general formulae (a) and (b)

General formula (a)

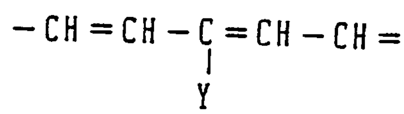

General formula (b)

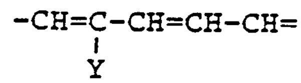

In the general formulae (a) and (b), Y represents a hydrogen atom or a monovalent group. Preferred examples of the monovalent group include lower alkyl groups such as a methyl group, substituted or unsubstituted phenyl groups, aralkyl groups such as a benzyl group, lower alkoxy groups such as a methoxy group, disubstituted amino groups such as dimethylamino, diphenylamino, methylphenylamino, morpholino, imidazolidino and ethoxycarbonylpiperazino groups, alkylcarbonyloxy groups such as an acetoxy group, alkylthio groups such as a methylthio group, a cyano group, a nitro group, halogen atoms such as F, Cl and Br.

Particularly preferred ones among the linking groups represented by L are linking groups necessary for forming dicarbocyanine dyes, and specifically include those represented by the general formulae (a) and (b).

An anion represented by $X^-$ is for supplying negative charge necessary for neutralization of charge of the cation part, and is a monovalent or divalent ion selected from halogen ions such as $Cl^-$, $Br^-$ and $I^-$, $SO_4^{2-}$, $HSO_4^-$, alkyl sulfate ions such as $CH_3OSO_3^-$, sulfonate ions such as a paratoluenesulfonate ion, a naphthalene-1,5-disulfonate ion, a methanesulfonate ion, a trifluoromethanesulfonate ion and an octanesulfonate ion, carboxylate ions such as an acetate ion, a p-chlorobenzoate ion, a trifluoroacetate ion, an oxalate ion and a succinate ion, $PF_6^-$, $BF_4^-$, $ClO_4^-$, $IO_4^-$, a tungstate ion, heteropolyacids ion such as a tungstophosphate ion, $H_2PO_4^-$, $NO_3^-$, a phenolate ion such as a picrate ion.

Preferred ones among the anions represented by $X^-$ include $Cl^-$, $Br^-$, $I^-$, $CH_3OSO_3^-$, $C_2H_5OSO_3^-$, a paratoluenesulfonate ion, a p-chlorobenzenesulfonate ion, a methanesulfonate ion, a butanesulfonate ion, a naphthalene-1,5-disulfonate ion, perfluorosulfonate ions such as a trifluoromethanesulfonate ion, $PF_6^-$, $BF_4^-$, $ClO_4^-$. Particularly preferred ones among the anions are a trifluoromethanesulfonate ion, $PF_6^-$ and $ClO_4^-$, and most preferred ones among them are a trifluoromethanesulfonate ion and $PF_6^-$ in view of no anxiety of explosion.

Particularly preferred dyes for optical information recording media suitable for readout by CD players are dyes represented by the general formula (I) wherein L is a linkage group formed by linking five optionally substituted methine groups through conjugated double bonds. By use of such a compound in the recording layer, an information recording medium can be obtained which has an extremely high reflectance of 70% or more against a plane flat.

In the optical information recording medium of the invention the reflectance of at least one point of the wavelength region of 750 to 850 nm preferably is 60% or more.

That is, in optical information recording media of the invention having an extremely high sensitivity, writing of EFM signals is possible by an irradiation power of 10 mW or less, and a reflectance of 60% or more against a plane flat can be realized, and thus readout by commercially available CD players is possible. Therefore, optical information recording media of the present invention can be used as DRAW type CD.

Specific examples of compounds represented by the general formula (I) and used in the present invention are mentioned below, but the scope of the present invention should not be limited to media comprising these specific examples.

1.

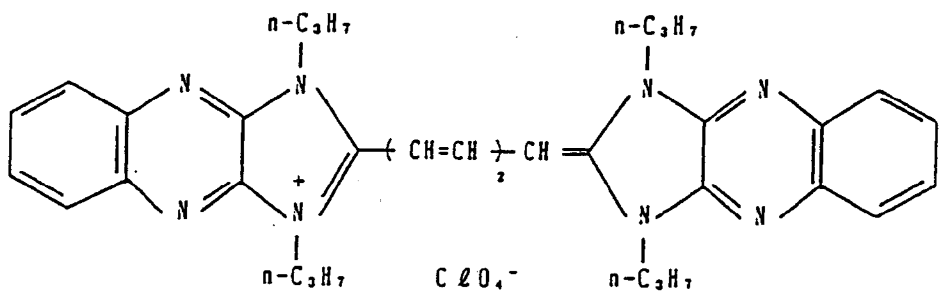

2.

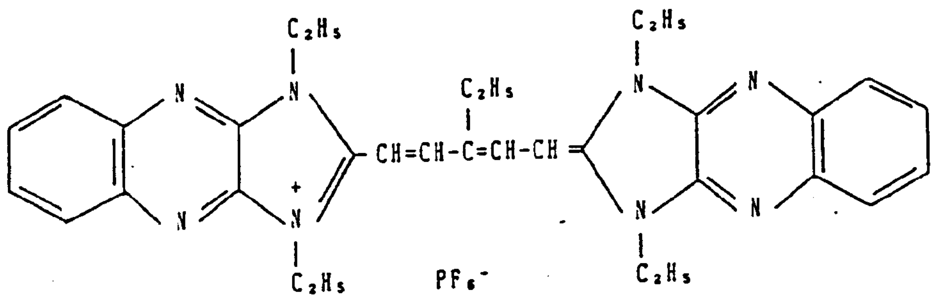

3.

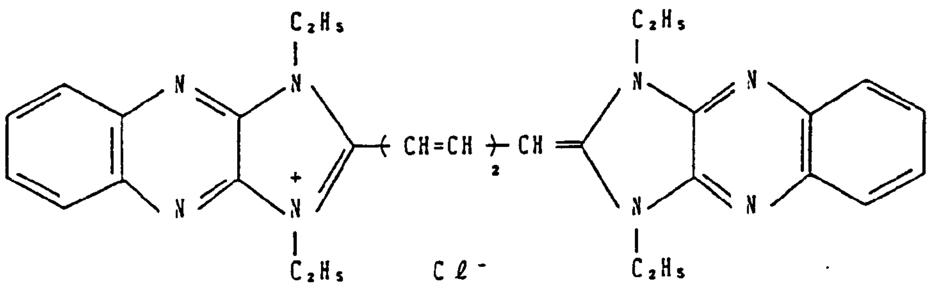

4.

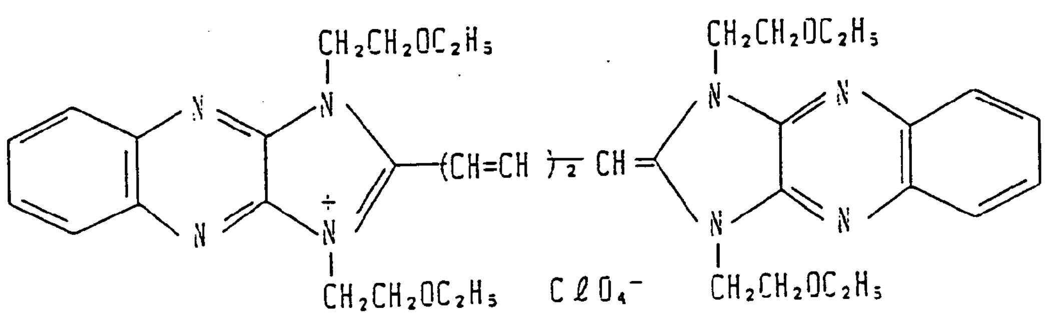

5.

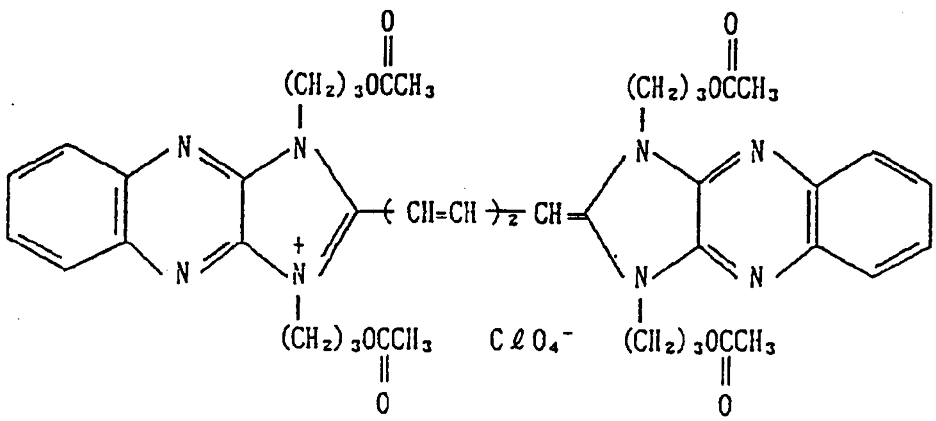

A compound represented by the general formula (I) of the present invention can be synthesized, for example, according to the method disclosed in US-A-3,431,111, namely by reacting an imidazoquinoxaline derivative represented by the following general formula (A) with a methine source such as an orthoformic ester, a trimethine source such as tetramethoxypropane, or a pentamethine source such as a glutacondialdehyde acetal or 1,7-diphenyl-1,7-diaza-1,3,5-heptatriene:

General formula (A)

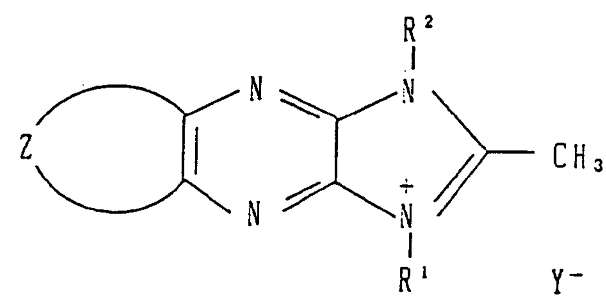

wherein $R^1$, $R^2$ and Z are the same as defined in the general formula (I), and Y represents an anion.

Examples of a solvent used in the reaction usually include alcohols such as methanol and ethanol, amides such as N,N-dimethylformamide, ethers such as tetrahydrofuran, heteroaromatic compounds such as pyridine and picoline. Addition of sodium acetate, a base such as triethylamine or acetic anhydride in the reaction sometimes accelerate the reaction.

Synthetic examples of compounds represented by the general formula (I) are described below.

Synthetic example 1 Synthesis of Compound 3

1,3-Diethyl-2-methylimidazo[4,5-b]quinoxalinium chloride (2.8 g) and 1.6 g of 1,1,3-trimethoxypropene were added to 10 ml of pyridine, and the mixture was refluxed for 10 minutes. After cooling, the reaction mixture was filtered and the resulting solid was washed with ethanol. This solid was twice recrystallized from ethanol to obtain 0.9 g of Compound 14.

M.p. 230 - 232°C

Synthetic example 2 Synthesis of Compound 4

To 5 g of 1,3-bis(2-ethoxyethyl)-2-methylimidazo[4,5-b]quinoxalinium p-toluenesulfonate were added 19 ml of pyridine, followed by heating for dissolution. Then, 4.7 ml of 1,1,3,3-tetramethoxypropane were added thereto and the mixture was stirred with heating for one hour. After cooling to room temperature, 100 ml of methanol were added and a solution of 4 g of tetrabutylammonium perchlorate in 20 ml of methanol was further added thereto. The resulting crystals were collected by filtration, washed with methanol and dried. Yield 1.6

g, melting point 215 - 216°C, absorption maximum wavelength (methanol solution) 690 nm.

Synthetic example 3 Synthesis of Compound 5.

To 3 g of 1,3-bis(3-acetoxypropyl)-2-methylimidazo[4,5-6]quinoxalilium p-toluenesulfonate were added 12 ml of pyridine, followed by heating for dissolution. Then, 2.9 ml of 1,1,3,3-tetramethoxypropane were added and the mixture was stirred with heating for one hour. After cooling to room temperature, 60 ml of methanol were added and a solution of 3 g of tetrabutylammonium perchlorate in 20 ml of methanol was added thereto. The resulting crystals were collected by filtration, washed with methanol and dried. Yield 0.7 g, melting point 171 - 181°C, absorption maximum wavelength (methanol solution) 688 nm.

In optical information recording media of the present invention, dyes represented by the general formula (I) may be used alone or in combination of two or more, or may be used together with dyes other than dyes of the present invention. Further, it is also effective to use various antioxidants or singlet oxygen quenchers together therewith for enhancement of reading durability. Further, various resins may also be used together.

It is also possible to increase reading durability by forming chelate compounds with dyes of the general formula (I) by addition of transition metal ions.

Various quenchers may be used in the present invention, but preferred ones are transition metal complexes which lower deterioration by readout and have good compatibility with dyes. Preferred center metals are Ni, Co, Cu, Pd, and Pt.

Examples of novel quenchers which may be used in the invention include quenchers represented by the formula (II) and (III) disclosed in J.P. KOKAI No. 62-174741:

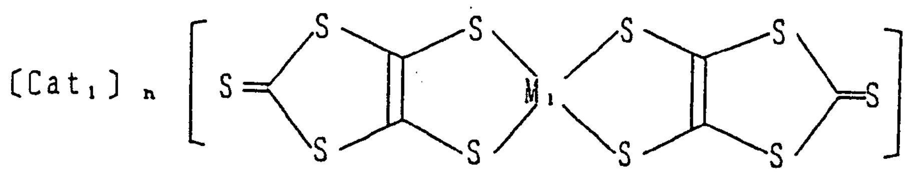 ··· (II)

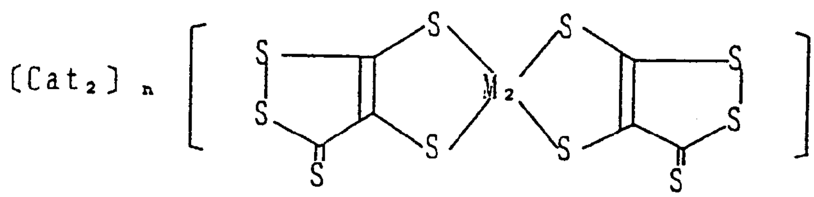 ······ (III)

wherein [$Cat_1$] and [$Cat_2$] represent cations necessary for making the respective complexes neutral, $M_1$ and $M_2$ represent nickel, copper, cobalt, palladium or platinum, and n represents 1 or 2.

Examples of an inorganic cation in the cation represented by [$Cat_1$] or [$Cat_2$] in the aforesaid general formula (II) or (III) include alkali metal ions such as $Li^+$, $Na^+$ and $K^+$, alkaline earth metal ions such as $Mg^{2+}$, $Ca^{2+}$ and $Ba^{2+}$.

Further, examples of an organic cation therein include quaternary ammonium ions and quaternary phosphonium ions.

Preferred cations among the above cations [$Cat_1$] and [$Cat_2$] are those represented by the following general formula (IV-a), (IV-b), (IV-c), (IV-d) or (IV-e):

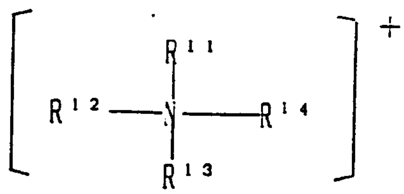 (IV-a)

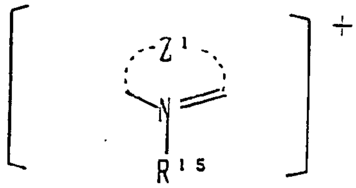

(IV-b)

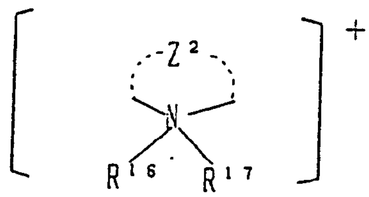

(IV-c)

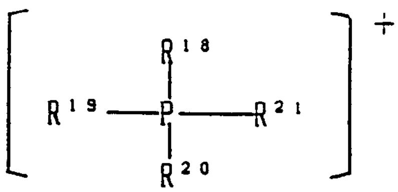

(IV-d)

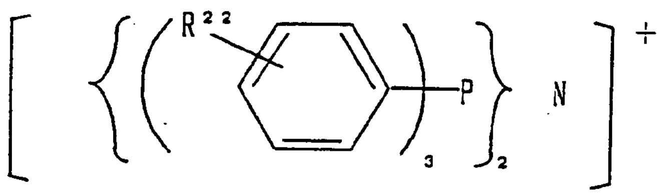

(IV-e)

wherein $R^{11}$, $R^{12}$, $R^{13}$, $R^{14}$, $R^{15}$, $R^{16}$, $R^{17}$, $R^{18}$, $R^{19}$, $R^{20}$, $R^{21}$ and $R^{22}$ independently represent a substituted or unsubstituted alkyl group having 1 to 20 carbon atoms, or a substituted or unsubstituted aryl group having 6 to 14 carbon atoms, and $Z^1$ and $Z^2$ independently represent a nonmetal atomic group which forms 5-membered or 6-membered ring together with a nitrogen atom in each formula.

The above substituted or unsubstituted alkyl group having 1 to 20 carbon atoms includes, for example a methyl group, an ethyl group, a n-butyl group, an iso-amyl group, a n-dodecyl group and n-octadecyl group. The aryl group having 6 to 14 carbon atoms include, for example a phenyl group, a tolyl group and an α-naphthyl group.

These alkyl groups and aryl groups may respectively be substituted with a cyano group, a hydroxyl group, an alkyl group having 1 to 20 carbon atoms (e.g., a methyl group, an ethyl group, an n-butyl group or an n-octyl group), an aryl group having 6 to 14 carbon atoms (e.g., a phenyl group, a tolyl group or an α-naphthyl group), an acyloxy group having 2 to 20 carbon atoms (e.g., an acetoxy group, a benzoyloxy group or p-methoxybenzoyloxy group), an alkoxy group having 1 to 6 carbon atoms (e.g., a methoxy group, an ethoxy group, a propoxy group or a butoxy group), an aryloxy group (e.g., a phenoxy group or a tolyloxy group), an aralkyl group (e.g., a benzyl group, or a phenethyl group), an alkoxycarbonyl group (e.g., a methoxycarbonyl group, an ethoxycarbonyl group or an n-butoxycarbonyl group), an aryloxycarbonyl group (e.g., a phenoxycarbonyl group or a tolyloxycarbonyl group), an acyl group (e.g., an acetyl group or a benzoyl group), an acylamino group (e.g., an acetylamino group or a benzoylamino group), a substituted or unsubstituted carbamoyl group (e.g., an N-ethycarbamoyl group or an N-phenylcarbamoyl group), an alkylsulfonylamino group (e.g., a methylsulfonylamino group), an arylsulfonylamino group (e.g., a phenylsulfonylamino group), an alkylsulfamoyl group (e.g., an N-ethylsulfamoyl group), an arylsulfamoyl group (e.g., an N-phenylsulfamoyl group), an alkyl- or arylsulfonyl group (e.g., a mesyl group or a tosyl group).

$Z^1$ and $Z^2$ independently represent a nonmetal atomic group necessary for forming a 5-membered ring or a 6-membered ring as aforesaid. The 5-membered ring or 6-membered ring may include a pyridine ring, an imidazole ring, a pyrrole ring, a 2-pyrroline ring, a pyrrolidine ring, a piperidine ring, a pyrazole ring, a pyrazoline ring, and an imidazoline ring.

Cations represented by the general formula (IV-b) may include, for example, a dodecylpyridinium group, a hexadecylpyridinium group and a dodecylimidazolium group. Cations represented by the general formula (IV-c) may include; for example, an N-ethyl-N-hexadecylpiperidinium group, an N-ethyl-N-dodecylpyrazolidinium group.

Cations preferably used in the present invention among cations represented by the above general formulae (IV-a), (IV-b), (IV-c), (IV-d) and (IV-e) and (IV-a), (IV-b) , (IV-d) and (IV-e) in view of availability of the raw materials and preparation cost.

The kind of these cations [$Cat_1$] and [$Cat_2$] has influence on the solubilities of the compounds represented by the aforesaid general formula (II) or (III) in organic solvents.

In general, when substituents linking to the quaternary hereto atom are alkyl groups, solubility of the compound increases as the chain lengths of the alkyl groups become longer. This tendency is remarkable in case of tetraalkyl substituted ammonium or tetraalkyl substituted phosphonium, and cations having a total carbon number of 17 or more in case of ammonium cations and cations having a total carbon number of 4 or more in case of phosphonium cations each bestow high solubilities on the compounds.

Enumeration of $M_1$ or $M_2$ in the compounds represented by the aforesaid general formula (II) or (III) in order of preference is nickel, cobalt, copper, palladium and platinum.

The metal complexes of the general formula (II) or (III) have stereostructures of plane four coordination. Though it cannot be definitely determined whether the thioketone groups in the compounds of the general formula (III) exist symmetrically or unsymmetrically in relation to the center metal, the thioketone groups are represented for convenience's sake as in the general formula (III) in the present specification.

The compounds represented by the aforesaid general formula (II) or (III) may be synthesized as follows.

A compound of the general formula (II) (n=2): Disodium 1,3-dithiol-2-thione-4,5-dithiolate obtained by reacting carbon disulfide with sodium is converted to the zinc complex, and benzoyl chloride is reacted with the complex to form a bisbenzoylthio compound. After decomposition with an alkali, the bisbenzoylthio compound is reacted with a metal salt to obtain the captioned compound.

Further, a compound of the general formula (II) (n=1) may be obtained by oxidizing a complex obtained as above-described (n=2) with a proper oxidizing agent.

A compound of the general formula (III) (n=2) : First, disodium 1,3-dithiol-2-thione-4,5-dithiolate obtained by reaction of carbon disulfide with sodium is heated to about 130°C to isomerize it to disodium 1,2-dithiol-3-thione-4,5-dithiolate. Then, this dithiolate is converted to a zinc complex, and benzoyl chloride is reacted with the zinc complex to form a bisbenzoylthio compound, which is then decomposed with an alkali and reacted with a metal salt to obtain the captioned compound.

A compound of the general formula (III) (n=1) may be obtained by oxidizing a complex obtained as above-described (n=2) with a proper oxidizing agent.

Further, the 1,3-dithiol-2-thione-4,5-dithiolate anion which is an intermediate for obtaining a compound of the general formula (II) or (III) may also be obtained by electrochemical reduction besides the Na-reduction method described above.

Preferred compounds among those represented by the aforesaid general formulae (II) are illustrated as:

II - (1) [ ($^nC_4H_9$)$_4$N ]

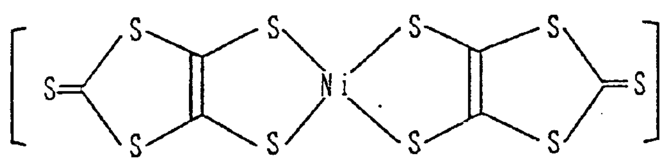

II - (2) [ ($^nC_4H_9$)$_4$P ]

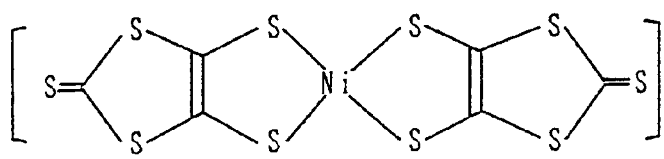

II - (3) $[(^{n}C_4H_9)_4N]_2$ 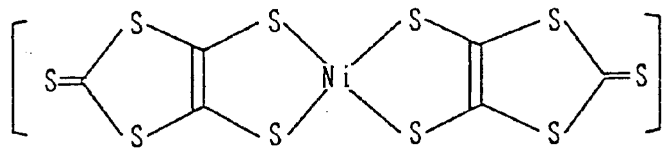

II - (4) $[(^{n}C_4H_9)_4P]_2$ 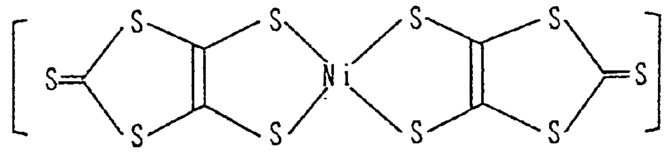

Synthetic examples of compounds represented by the general formula (II) are described as follows:

Synthetic example 4

Synthesis of exemplified compound (II-4)

(1-1) Synthesis of bis(tetraethylammonium)bis(1,3-dithiol-2-thione-4,5-dithiolato)zinc complex

All reaction procedures were conducted under an argon atmosphere. 23 g of sodium were cut into small pieces and dispersed in 180 ml of carbon disulfide, followed by dropwise addition in a slow speed of 200 ml of dimethylformamide thereto with stirring. During the dropwise addition, caution should be given so that the mixture does not rapidly generate heat. After the dropwise addition of dimethylformamide, the mixture was gently heated with caution and refluxed for 24 hours. After completion of the reaction of the unreacted sodium was removed by filtration. Then, 50 ml of ethanol were added to the filtrate, and the mixture was stirred at room temperature for 2 hours. Carbon disulfide was distilled away from this solution at room temperature under reduced pressure. Then, 300 ml of water were slowly added dropwise thereto and the resulting solution was filtered.

Separately in advance, 20 g of zinc chloride were dissolved in 500 ml of methanol and 500 ml of concentrated ammonia water were added thereto to prepare a solution. This solution was added to the above filtrate at room temperature. After stirring for 5 minutes, an aqueous solution of 53 g of tetraethylammonium bromide in 250 ml of water was added to the mixture to immediately form a red precipitate, which was recovered by filtration and air-dried to obtain the captioned zinc complex.

(1-2) Synthesis of 4,5-bis(benzoylthio)-1,3-dithiol-2-thione

22 g of the zinc complex obtained in (1-1) were dissolved in 500 ml of acetone and filtered. 150 ml of benzoyl chloride were added to the filtrate with stirring to form immediately a yellow precipitate. The precipitate was recovered by filtration, washed with water and air-dried to obtain 16 g of the captioned compound.

(1-3) Synthesis of exemplified compound (II-4)

9.2 g of the bis(benzoylthio) compound obtained in (1-2) were dissolved in 50 ml of methanol. Then, 6.3 g of a 28% methanol solution of sodium methoxide were added thereto, followed by stirring for 10 minutes. To this solution was added a solution of 2.4 g of nickel chloride hexahydrate in 50 ml of methanol, and the mixture was stirrerd at room temperature for 30 minutes. To the resulting solution was added a solution of 8.5 g of tetrabutylphosphonium bormide in 100 ml of methanol to form immediately a black precipitate. The mixture was stirred for additional 20 minutes and filtered. The solid was washed with acetone, air-dried and recrystallized from acetone-isopropyl alcohol to obtain the captioned compound. Yield 3.8 g.

Synthetic example 5

Synthesis of exemplified compound (II-2)

1 g of the nickel complex obtained in (1-3) were dissolved in 60 ml of acetone, and 30 ml of acetic acid were added thereto. The mixture was stirred for 3 hours and the solvent was distilled away to form black crystals, which was then recrystallized from acetone-methanol to obtain the desired exemplified compound (II-2). Yield 0.4 g, M.P. 185°C, λmax: 1125 nm, εmax: $2.51 \times 10^4$ (in $CH_2Cl_2$)

Examples of known quenchers which may be used in the invention include the following compounds disclosed in J.P. KOKAI No. 59-178295.

(i) Bisdithio-α-di-ketones

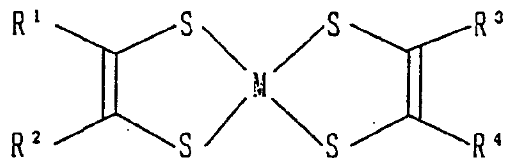

wherein $R^1$ to $R^4$ independently represent an alkyl group or an aryl group, and M represents a divalent transition metal atom.

(ii) Bisphenyldithiols

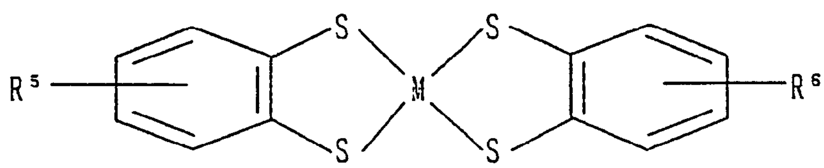

wherein $R^5$ and $R^6$ independently represent an alkyl group or a halogen atom, and M represents a divalent transition metal atom.

(iii) Acetylacetonate chelates
(iv) Dithiocarbamic acid chelates
(v) Bisphenylthiols
(vi) Thiocatechol chelates
(vii) Salicylaldehyde oximes
(viii) Thiobisphenolate chelates
(ix) Phosphonous acid chelates
(x) Benzoates
(xi) Hindered amines
(xii) Transition metal salts

Besides the above compounds, a compound containing an aminium or diimonium ion represented by the following formula may also be used in the invention as known quenchers.

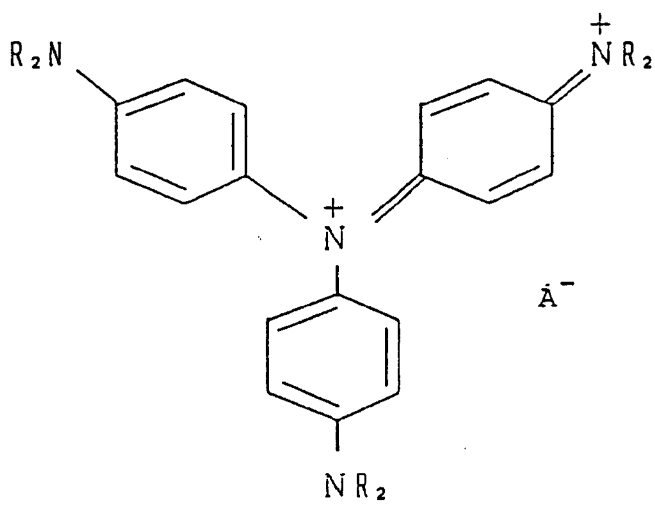

wherein R represents an alkyl group or an aryl group and A represents an anion. Specific examples thereof include IRG-002, IRG-003, IRG-022 and IRG-023 each manufactured by NIPPON KAYAKU CO., LTD.

A linkage compound of a cation of a dye of the general formula (I) to an anion of a quencher may also be used in the invention.

A quencher is generally used in an amount of 0.05 to 12 moles, preferably 0.1 to 1.2 moles per 1 mole of

dye(s) of the general formula (I).

Though a quencher is preferably contained in the dye thin film recording layer, it may be contained in a layer different from the recording layer. It is possible to provide a subbing layer on the support, a protective layer on the recording layer, and/or a reflective layer on the support or on the recording layer in the optical information recording medium of the invention.

Known supports may optionally be used as a support. Typical examples thereof are glasses and plastics such as acryls, polycarbonates, polysulfones, polyimides, amorphous polyolefins, epoxy resins, and polyesters. The support may be used in various shapes such as disc-like, card-like, sheet-like and roll film-like shapes.

Groove may be formed on the glass or plastic support in order to make tracking during recording easy. Further, a subbing layer of a plastic binder, or an inorganic oxide, an inorganic sulfide may be provided on the glass or plastic support. A subbing layer having a thermal conductivity lower than that of the support is preferable. Further, it is also possible to make two recording media facing with each other so that both recording layers are inside, namely to make two recording media so-called air sandwich structure.

The recording layer in the present invention may be formed, for example, by dissolving dye(s) represented by the general formula (I) and a quencher in an organic solvent (for example, methanol, ethanol, isopropyl alcohol, a fluorinated alcohol such as 2,2,3,3-tetrafluoropropanol, dichloromethane, dichloroethane or acetone), and, if necessary, adding a proper binder (for example, PVA, PVP, polyvinyl butyral, polycarbonate, nitrocellulose, polyvinyl formal, methyl vinyl ether, chlorinated paraffin, maleic anhydride copolymer, styrene-butadiene copolymer or xylene series resin), and applying the solution (for example by spin coating) onto a support. The recording layer may also be formed by co-depositing dye(s) of the general formula (I) and a quencher on a support, or by vacuum-depositing dye(s) of the general formula (I) and then applying a quencher. When a binder is used, it is preferable to use it in an amount of 0.01 to 2 times the weight of the dye. Further, it is also possible to form a thin film according to Langmuir-Blodgett's technique using dye(s) of the general formula (I).

It is possible to provide one or more of the recording layers in the present invention.

An antioxidant or a fading inhibitor may be contained in the recording layer or a layer adjacent thereto in order to inhibit deterioration of the dye.

Film thickness of the recording layer is usually in the range of 0.01 to 2 μm, preferably in the range of 0.02 to 0.8 μm.

When a layer for reflecting semiconductor laser, or He-Ne laser is provided, the optical information recording medium of the present invention may be made either by providing a reflecting layer on a support and then providing a recording layer on the reflecting layer in such a manner as aforementioned, or by providing a recording layer on a support and then providing a reflecting layer thereon.

The reflecting layer may be provided in such a manner as described below besides a sputtering method, or an ion plating method.

For example, a solution which is prepared by dissolving a metal salt or a metal complex salt in a water soluble resin (PVP, PVA) and further adding a reducing agent thereto is applied onto a support and the resulting support is dried with heating at 50 to 150°C, preferably 60 to 100°C, whereby a reflecting layer is provided thereon.

The metal salt or the metal complex salt is used in a weight ratio of 0.1 to 10, preferably 0.5 to 1.5 based on the resin. Further, as for the thickness of the recording layer, it is proper that the thickness of the metal particle reflecting layer is in the range of 0.01 to 0.1 μm and that of the light absorption layer is in the range of 0.01 to 1 μm.

Usable metal salts and metal complex salts include silver nitrate, potassium silver cyanide, potassium gold cyanide, silver ammine complex, silver cyan complex, gold salt or gold cyan complex. Usable reducing agents include formalin, tartaric acid, a tartrate, a hypophosphite, sodium borohydride, and dimethylamine borane. The reducing agent may be used in the range of 0.2 to 10 moles, preferably 0.5 to 4 moles per 1 mole of the metal salt or the metal complex salt.

In the optical information recording medium of the present invention, recording of information is conducted by applying a spot-like high energy beam such as laser (for example, semiconductor laser and He-Ne laser) onto the recording layer through the support or from the opposite side of the support. That is to say, light absorbed in the recording layer is converted to heat and pits are formed in the recording layer.

On the other hand, reading of information is conducted by applying a laser beam with a low power of energy equal to or below the threshold value for recording, and detecting the difference in quantity of reflected light or quantity of transmitted light between pitted areas and unpitted areas.

The present invention is further explained in detail below according to examples, but the scope of the present invention should not be limited thereto.

Example 1

Dye, quencher and an optional binder represented in Table 1 were dissolved in a mixed solvent of methanol, methyl ethyl ketone, dichloroethane and 2,2,3,3-tetrafluoropropanol in a proper mutual ratio. A surface-hardened polycarbonate support with a groove (pitch 1.6 µm, depth 750 A) was coated with the solution to a thickness of 0.1 µm using a spinner, and dried. Weight ratio of the dye to the quencher was 3:1, and in case of using a binder, the weight thereof was 1/5 of the dye.

The following evaluation conditions were applied. The results are shown in Table 1.

(Recording and readout)

| | |
|---|---|
| Laser : | Semiconductor laser (GaAlAs) |
| Wavelength of laser : | 780 nm |
| Beam size of laser : | 1.6 µm |
| Line speed : | 5 m/s |
| Recording power : | 8 mW |
| Recording frequency : | 2.5 MHz |
| Recording duty : | 50% |
| Readout power : | 0.4 mW |

(Evaluation of readout deterioration)

| | |
|---|---|
| Readout power : | 1.0 mW |
| Readout number : | $10^5$ times |

(Evaluation of deterioration during preservation)

| | |
|---|---|
| Preservation temperature and humidity: | 60°C, 90%RH |
| Preservation time : | 30 days |

Comparative compound A

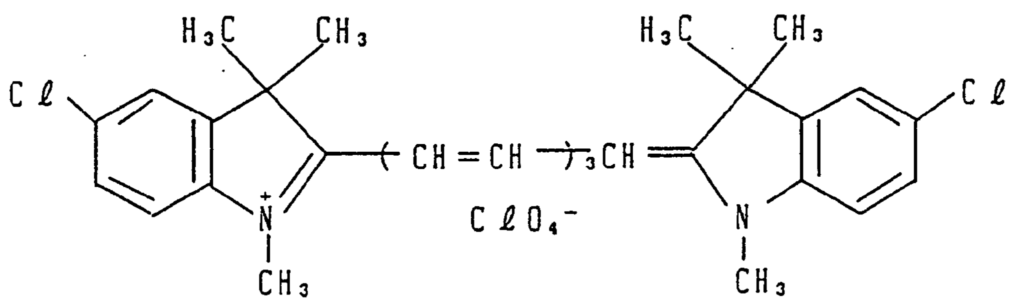

Comparative compound B

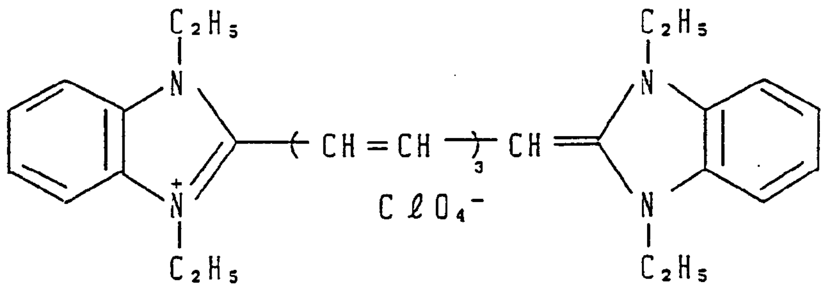

Table 1

| Sample No. | Dye | Quencher | Binder | C/N (dB) | After forced deterioration test C/N (dB) | | Note |
|---|---|---|---|---|---|---|---|
| | | | | | 60°C, 90%RH, 3 days | Continuous readout (0.8 mW) | |
| 1 | A | - | - | 54 | 45 | 42 | Comparative example |
| 2 | " | II-(2) | - | 52 | 45 | 48 | " |
| 3 | " | - | Nitrocellulose | 53 | 46 | 42 | " |
| 4 | " | II-(4) | Chlorinated paraffin | 52 | 46 | 48 | " |
| 5 | B | - | - | 48 | 39 | 39 | " |
| 6 | " | II-(2) | - | 46 | 39 | 43 | " |
| 7 | " | - | Polystyrene | 46 | 43 | 39 | " |
| 8 | " | II-(4) | Nitrocellulose | 45 | 43 | 43 | " |
| 9 | 2 | - | - | 54 | 51 | 51 | " |
| 10 | " | II-(2) | - | 53 | 49 | 52 | " |
| 11 | " | - | Nitrocellulose | 53 | 52 | 50 | " |
| 12 | " | II-(4) | Polystyrene | 53 | 51 | 52 | " |
| 13 | 4 | - | - | 54 | 51 | 50 | " |
| 14 | 5 | - | - | 53 | 50 | 50 | " |

It is seen from the result in Table 1 that information recording media of the present invention have better recording performance and stability than those in the comparative examples.

## Claims

**1.** An optical information recording medium for carrying out recording or readout by laser beam which comprises a support having carried thereon a recording layer containing dye(s) represented by the general formula (I):

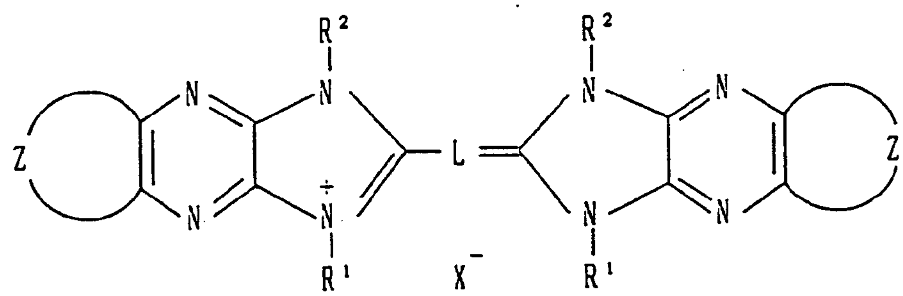

wherein $R^1$ and $R^2$ independently represent substituted or unsubstituted alkyl groups, L represents a linking group formed by linkage of 5 substituted or unsubstituted methine groups through conjugated double bonds, Z represents an atomic group for completing an unsubstituted benzene ring, and $X^-$ represents a halogen ion, $SO_4^{2-}$, $HSO_4^-$, an alkylsulfate ion, a sulfonate ion, a carboxylate ion, $PF_6^-$, $BF_4^-$, $ClO_4^-$, $IO_4^-$, a tungstate ion, a heteropolyacid ion, $H_2PO_4^-$, $NO_3^-$, or a phenolate ion for neutralization of electron charge of the cationic part.

2. The optical information recording medium of claim 1 wherein the respective substituents in the definition of $R^1$ and $R^2$ in the general formula (I) are independently those having a hydrophobic parameter $\pi$ of -0.5 to 15 calculated according to C. Hansch.

3. The optical information recording medium of claim 1 wherein the respective substituent in the definition of $R^1$ and $R^2$ in the general formula (I) are independently halogen atoms, substituted or unsubstituted phenyl groups, alkylthio groups, or substituted or unsubstituted phenylthio groups.

4. The optical information recording medium of claim 1 which comprises a singlet oxygen quencher.

5. The optical information recording medium of claim 4 wherein the quencher is a compound represented by the general formula (II) or (III):

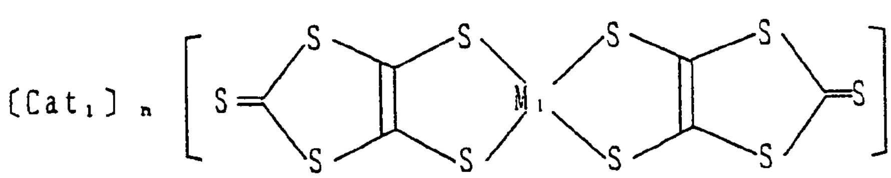

···(II)

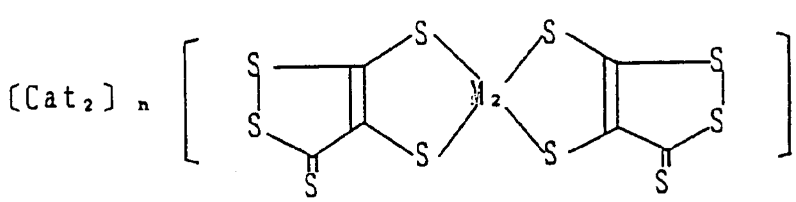

······(III)

wherein $[Cat_1]$ and $[Cat_2]$ represent cations necessary for making the compound neutral, $M_1$ and $M_2$ independently represent nickel, copper, cobalt, palladium or platinum, and n represents 1 or 2.

6. The optical information recording medium of claim 5 wherein $[Cat_1]$ and $[Cat_2]$ represent an alkali metal ion, an alkaline earth metal ion or $NH_4^+$.

7. The optical information recording medium of claim 5 wherein $[Cat_1]$ and $[Cat_2]$ are cations represented by one of the general formulae (IV-a) and (IV-e):

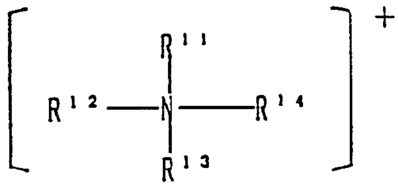

(IV-a)

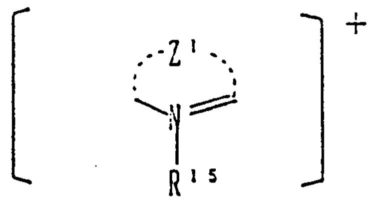

(IV-b)

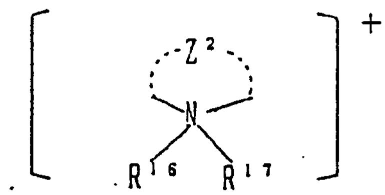

(IV-c)

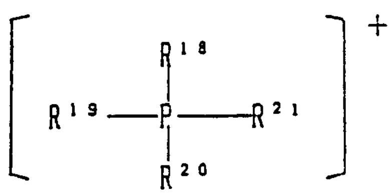

(IV-d)

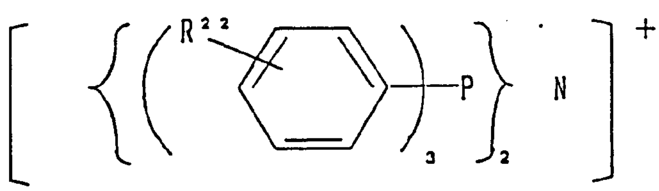

(IV-e)

wherein $R^{11}$, $R^{12}$, $R^{13}$, $R^{14}$, $R^{15}$, $R^{16}$, $R^{17}$, $R^{18}$, $R^{19}$, $R^{20}$, $R^{21}$, and $R^{22}$ independently represent substituted or unsubstituted alkyl groups having 1 to 20 carbon atoms, or substituted or unsubstituted aryl groups having 6 to 14 carbon atoms, and $Z^1$ and $Z^2$ independently represent nonmetal atomic groups which form a 5-membered or 6-membered ring together with a nitrogen atom in each formula.

8. The optical information recording medium of claim 7 wherein the substituents of the alkyl group and aryl group in the definition of $R^{11}$ to $R^{22}$ are independently a cyano group, a hydroxyl group, an alkyl group having 1 to 20 carbon atoms, an aryl group having 6 to 14 carbon atoms, an acyloxy group having 2 to 20 carbon atoms, an alkoxy group having 1 to 6 carbon atoms, an aryloxy group, an aralkyl group, an alkoxycarbonyl group, an aryloxycarbonyl group, an acyl group, an acylamino group, a substituted or unsubstituted carbamoyl group, an alkylsulfonylamino group, an arylsulfonylamino group, an alkylsulfamoyl group, an arylsulfamoyl group, an alkylsulfonyl group or an arylsulfonyl group.

9. The optical information recording medium of claim 7 wherein the 5-membered ring or 6-membered ring in the definition of $Z^1$ and $Z^2$ is a pyridine ring, an imidazole ring, a pyrrole ring, a 2-pyrroline ring, a pyrrolidine ring, a piperidine ring, a pyrazole ring, a pyrazoline ring or an imidazoline ring.

10. The optical information recording medium of claim 4 wherein the quencher is selected from the following compounds:

(i) Bisdithio-α-diketones

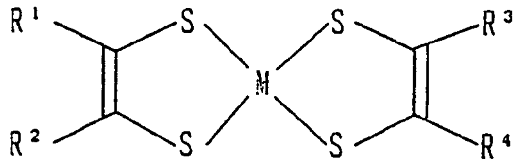

wherein $R^1$ to $R^4$ independently represent an alkyl group or an aryl group, and M represents a divalent transition metal atom.

(ii) Bisphenyldithiols

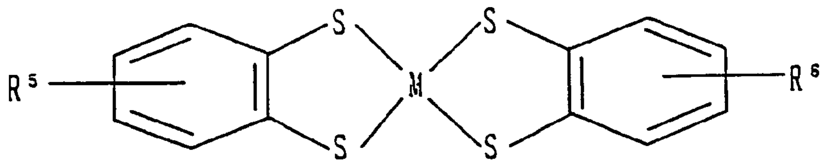

wherein $R^5$ and $R^6$ independently represent an alkyl group or a halogen atom, and M represents a divalent transition metal atom.

(iii) Acetylacetonate chelates
(iv) Dithiocarbamic acid chelates
(v) Bisphenylthiols
(vi) Thiocatechol chelates
(vii) Salicylaldehyde oximes
(viii) Thiobisphenolate chelates
(ix) Phosphonous acid chelates
(x) Benzoates
(xi) Hindered amines
(xii) Transition metal salts
(xiii) Aminium or diimonium compounds

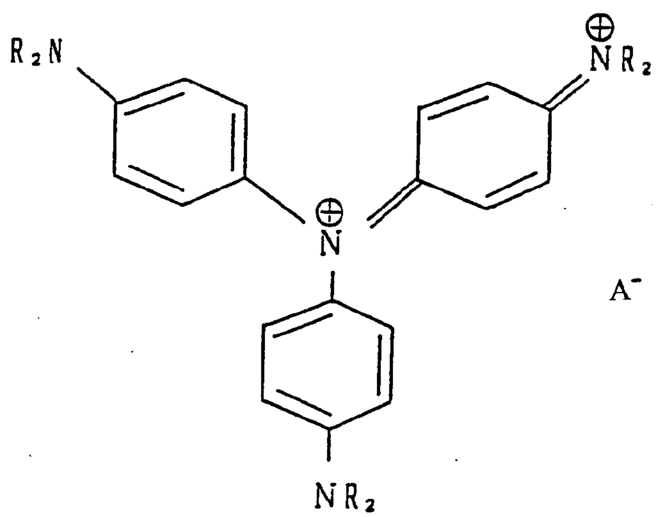

wherein $R_2$ represents an alkyl group or an aryl group and A represents an anion.

**11.** The optical information recording medium of claim 4 wherein the quencher is used in an amount of 0.05 to 12 moles per 1 mole of the compound of the general formula (I).

**12.** The optical information recording medium of claim 1 wherein a subbing layer is provided on the support,

a protective layer is provided on the dye thin film recording layer, and/or a reflecting layer is provided on the support or on the recording layer.

**13.** The optical information recording medium of claim 4 wherein the quencher is contained in the recording layer.

**14.** The optical information recording medium of claim 1 wherein the support is glass or plastics.

**15.** The optical information recording medium of claim 1 which comprises a binder in an amount of 0.01 to 2 times the weight of the compound of the general formula (I).

**16.** The optical information recording medium of claim 1 wherein the film thickness of the recording layer is 0.01 to 2 micrometers.

**17.** The optical information recording medium of claim 1 wherein the reflectance of at least one point of the wavelength region of 750 to 850 nm is 60% or more.

**18.** The optical information recording medium of claim 1 which has a dye recording layer in which CD format signals can be recorded and/or from which CD format signals can be read out.

## Patentansprüche

**1.** Optisches Informationsaufzeichnungsmedium zum Aufzeichnen oder Auslesen durch einen Laserstrahl, umfassend einen Träger mit einer darauf angeordneten Aufzeichnungsschicht, enthaltend einen durch die allgemeine Formel (I) dargestellten Farbstoff(e)

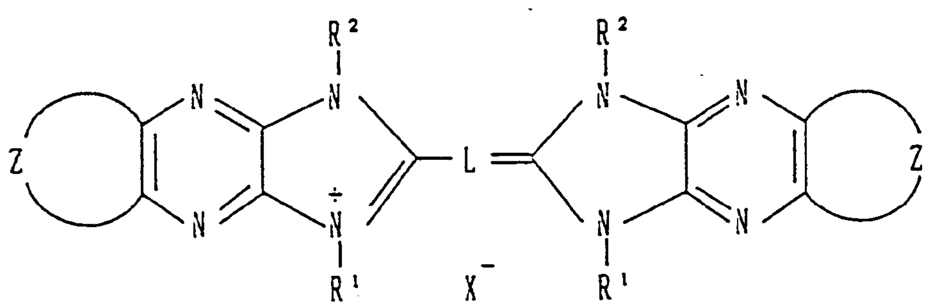

worin bedeuten: $R^1$ und $R^2$ unabhängig substituierte oder nicht substituierte Alkylgruppen, L eine Verknüpfungsgruppe, gebildet durch Vernüpfung von 5-substituierten oder nicht substituierten Methingruppen über konjugierte Doppelbindungen, Z eine Atomgruppe zum Vervollständigen eines nicht substituierten Benzolrings und $X^-$ ein Halogenion, $SO_4^{2-}$, $HSO_4^-$, ein Alkylsulfation, ein Sulfonation, ein Carboxylation, $PF_6^-$, $BF_4^-$, $ClO_4^-$,
$IO_4^-$, ein Wolframation, ein Heteropolysäureion, $H_2PO_4^-$, $NO_3^-$ oder ein Phenolation zum Neutralisieren der Elektronenladung des kationischen Teils.

**2.** Optisches Informationsaufzeichnungsmedium nach Anspruch 1, worin die betreffenden Substituenten in der Definition von $R^1$ und $R^2$ in allgemeiner Formel (I) unabhängig solche sind, welche einen hydrophoben Parameter $\tau$ von -0,5 bis 15, berechnet gemäß C. Hansch, besitzen.

**3.** Optisches Informationsaufzeichnungsmedium nach Anspruch 1, worin der betreffende Substituent in der Definition von $R^1$ und $R^2$ in der allgemeinen Formel (I) unabhängig Halogenatome, substituierte oder nicht substituierte Phenylgruppen, Alkylthiogruppen oder substituierte oder nicht substituierte Phenylthiogruppen sind.

**4.** Optisches Informationsaufzeichnungsmedium nach Anspruch 1, welches einen Singlett-Sauerstofflöscher umfaßt.

5. Optisches Informationsaufzeichnungsmedium nach Anspruch 4, worin der Löscher eine durch die allgemeinen Formeln (II) oder (III) dargestellte Verbindung ist:

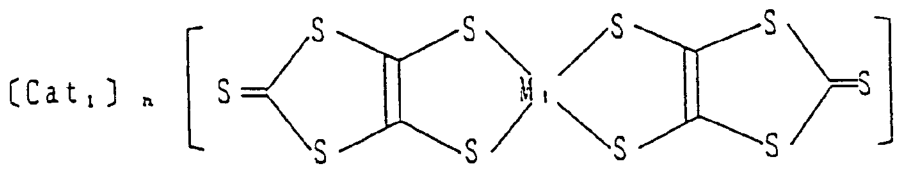

···(II)

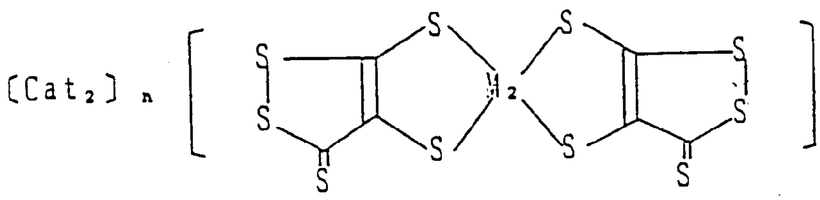

······(III)

worin [$Cat_1$] und [$Cat_2$] Kationen bedeuten, welche notwendig sind, um die Verbindung neutral zu machen, $M_1$ und $M_2$ bedeuten unabhängig Nickel, Kupfer, Kobalt, Palladium oder Platin, und n bedeutet 1 oder 2.

6. Optisches Informationsaufzeichnungsmedium nach Anspruch 5, worin [$Cat_1$] und [$Cat_2$] ein Alkalimetallion, ein Erdalkalimetallion oder $NH_4^+$ bedeuten.

7. Optisches Informationsaufzeichnungsmedium nach Anspruch 5, worin [$Cat_1$] und [$Cat_2$] Kationen sind, die durch eine der allgemeinen Formeln (IV-a) und (IV-e) dargestellt werden:

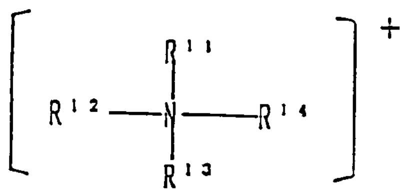

(IV-a)

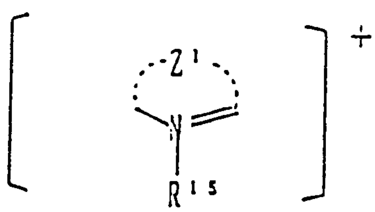

(IV-b)

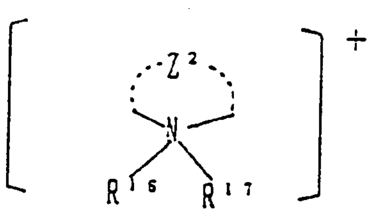

(IV-c)

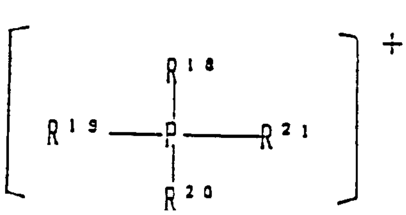

(IV-d)

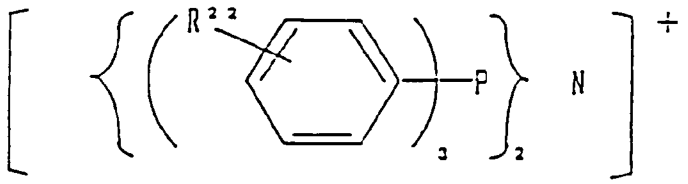

(IV-e)

worin $R^{11}$, $R^{12}$, $R^{13}$, $R^{14}$, $R^{15}$, $R^{16}$, $R^{17}$, $R^{18}$, $R^{19}$, $R^{20}$, $R^{21}$ und $R^{22}$ unabhängig substituierte oder nicht substituierte Alkylgruppen mit 1 bis 20 Kohlenstoffatomen oder substituierte oder nicht substituierte Arylgruppen mit 6 bis 14 Kohlenstoffatomen bedeuten, und $Z^1$ und $Z^2$ bedeuten unabhängig nicht-metallische Atomgruppen, welche einen 5- oder 6-gliedrigen Ring zusammen mit einem Stickstoffatom in jeder Formel bilden.

**8.** Optisches Informationsaufzeichnungsmedium nach Anspruch 7, worin die Substituenten der Alkylgruppe und Arylgruppe in der Definition von $R^{11}$ bis $R^{22}$ unabhängig eine Cyanogruppe, eine Hydroxylgruppe, eine Alkylgruppe mit 1 bis 20 Kohlenstoffatomen, eine Arylgruppe mit 6 bis 14 Kohlenstoffatomen, eine Acyloxygruppe mit 2 bis 20 Kohlenstoffatomen, eine Alkoxygruppe mit 1 bis 6 Kohlenstoffatomen, eine Aryloxygruppe, eine Aralkylgruppe, eine Alkoxycarbonylgruppe, eine Aryloxycarbonylgruppe, eine Acylgruppe, eine Acylaminogruppe, eine substituierte oder nicht substituierte Carbamoylgruppe, eine Alkylsulfonylaminogruppe, eine Arylsulfonylaminogruppe, eine Alkysuflamoylgruppe, eine Arylsulfamoylgruppe, eine Alkylsulfonylgruppe oder eine Arylsulfonylgruppe sind.

**9.** Optisches Informationsaufzeichnungsmedium nach Anspruch 7, worin der 5-gliedrige oder 6-gliedrige Ring in der Definition von $Z^1$ und $Z^2$ ein Pyridinring, ein Imidazolring, ein Pyrrolring, ein 2-Pyrrolinring, ein Pyrrolidinring, ein Piperidinring, ein Pyrazolring, ein Pyrazolinring oder ein Imidazolinring ist.

**10.** Optisches Informationsaufzeichnungsmedium nach Anspruch 4, worin der Löscher ausgewählt ist aus folgenden Verbindungen:

(i) Bisdithio-α-diketone

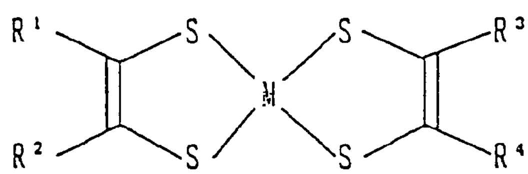

worin $R^1$ bis $R^4$ unabhängig eine Alkylgruppe oder eine Arylgruppe bedeuten, und M bedeutet ein zweiwertiges Übergangsmetallatom.

(ii) Bisphenyldithiole

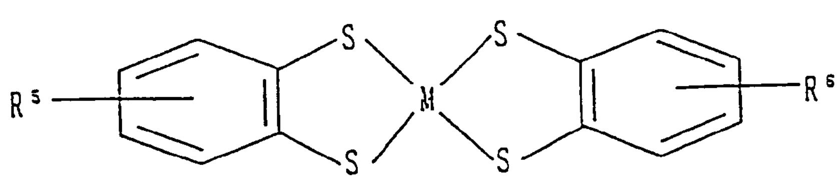

worin $R^5$ und $R^6$ unabhängig eine Alkylgruppe oder ein Halogenatom bedeuten, und M bedeutet ein zweiwertiges Übergangsmetallatom.

(iii) Acetylacetonchelate
(iv) Dithiocarbaminsäurechelate
(v) Bisphenylthiole
(vi) Thiocatechinchelate
(vii) Salicylaldehydoxime
(viii) Thiobisphenolatchelate
(ix) Phosphonsäurechelate

(x) Benzoate
(xi) gehinderte Amine
(xii) Übergangsmetallsalze
(xiii) Aminium- oder Diimoniumverbindungen

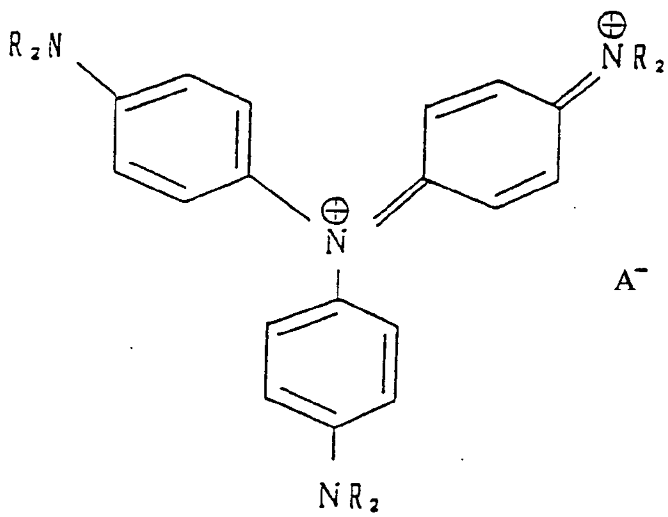

worin $R_2$ eine Alkylgruppe oder eine Arylgruppe bedeutet, und A bedeutet ein Anion.

**11.** Optisches Informationsaufzeichnungsmedium nach Anspruch 4, worin der Löscher in einer Menge von 0,05 bis 12 Mol pro 1 Mol der Verbindung der allgemeinen Formel (I) verwendet wird.

**12.** Optisches Informationsaufzeichnungsmedium nach Anspruch 1, worin eine Unterschicht auf dem Träger angeordnet ist, eine Schutzschicht auf der Aufzeichnungsschicht aus einem dünnen Farbstoffilm angeordnet ist und/oder eine Reflexionsschicht auf dem Träger oder auf der Aufzeichnungsschicht angeordnet ist.

**13.** Optisches Informationsaufzeichnungsmedium nach Anspruch 4, worin der Löscher in der Aufzeichnungsschicht enthalten ist.

**14.** Optisches Informationsaufzeichnungsmedium nach Anspruch 1, worin der Träger aus Glas oder Kunststoffen ist.

**15.** Optisches Informationsaufzeichnungsmedium nach Anspruch 1, umfassend ein Bindemittel in einer Gewichtsmenge des 0,01-bis 2-fachen der Verbindung der allgemeinen Formel (I).

**16.** Optisches Informationsaufzeichnungsmedium nach Anspruch 1, worin die Filmdicke der Aufzeichnungsschicht 0,01 bis 2 μm beträgt.

**17.** Optisches Informationsaufzeichnungsmedium nach Anspruch 1, worin die Reflexionsstärke wenigstens eines Punkts des Wellenlängenbereichs von 750 bis 850 nm 60% oder mehr beträgt.

**18.** Optisches Informationsaufzeichnungsmedium nach Anspruch 1, welches eine Farbstoffaufzeichnungsschicht besitzt, in der CD-Formatsignale aufgezeichnet und/oder aus der CD-Formatsignale ausgelesen werden können.

## Revendications

**1.** Support d'enregistrement optique d'informations pour la mise en oeuvre de l'enregistrement ou de la lecture par un faisceau laser, qui comprend un support portant une couche d'enregistrement contenant un ou des colorants représentés par la formule générale (I) :

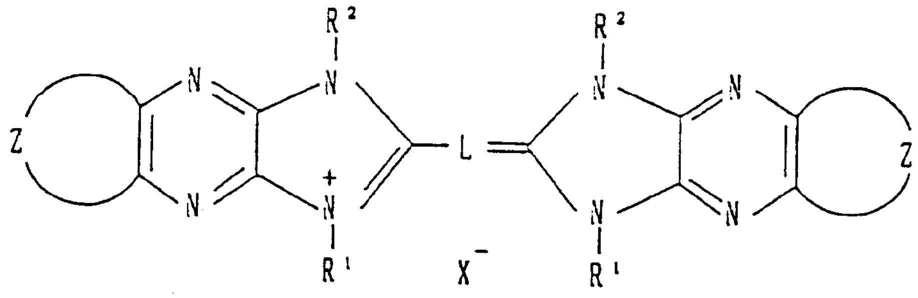

dans laquelle $R^1$ et $R^2$ représentent indépendamment des groupes alkyles substitués ou non, L représente un groupement de liaison formé par enchaînement par des doubles liaisons conjuguées de 5 groupes méthines substitués ou non, Z représente un groupe atomique pour compléter un noyau benzénique non substitué et $X^-$ représente un ion halogénure, un ion $SO_4^{2-}$, un ion $HSO_4^-$, un ion alkylsulfate, un ion sulfonate, un ion carboxylate, un ion $PF_6^-$, un ion $BF_4^-$, un ion $ClO_4^-$, un ion $IO_4^-$, un ion tungstate, un ion d'hétéropolyacide, un ion $H_2PO_4^-$, un ion $NO_3^-$ ou un ion phénolate pour la neutralisation de la charge électronique de la partie cationique.

2. Support d'enregistrement optique d'informations selon la revendication 1, dans lequel les substituants respectifs dans la définition de $R^1$ et de $R^2$ dans la formule générale (I) sont indépendamment ceux ayant un paramètre hydrophobe $\pi$ de -0,5 à 15, calculé selon C. Hansch.

3. Support d'enregistrement optique d'informations selon la revendication 1, dans lequel les substituants respectifs dans la définition de $R^1$ et $R^2$ dans la formule générale (I) sont indépendamment des atomes d'halogènes, des groupes phényles substitués ou non, des groupes alkylthio ou des groupes phénylthio substitués ou non.

4. Support d'enregistrement optique d'informations selon la revendication 1 qui comprend un extincteur d'oxygène à singulet.

5. Support d'enregistrement optique d'informations selon la revendication 4, dans lequel l'extincteur est un composé représenté par l'une des formules générales (II) et (III) :

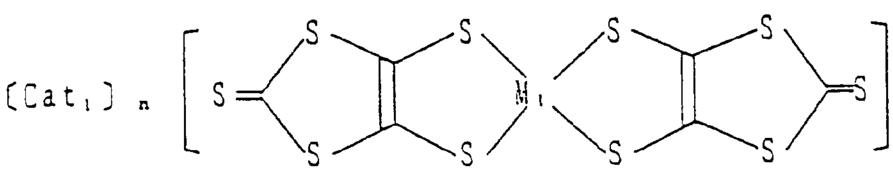

···(II)

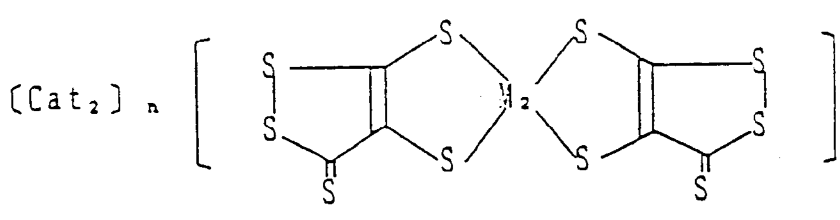

······(III)

dans lesquelles $[Cat_1]$ et $[Cat_2]$ représentent des cations nécessaires pour que le composé soit neutre, $M_1$ et $M_2$ représentent indépendamment le nickel, le cuivre, le cobalt, le palladium ou le platine et n représente 1 ou 2.

6. Support d'enregistrement optique d'informations selon la revendication 5, dans lequel $[Cat_1]$ et $[Cat_2]$ représentent un ion de métal alcalin, un ion de métal alcalino-terreux ou un ion $NH_4^+$.

7. Support d'enregistrement optique d'informations selon la revendication 5, dans lequel $[Cat_1]$ et $[Cat_2]$ sont des cations représentés par l'une des formules générales (IV-a) à (IV-e) :

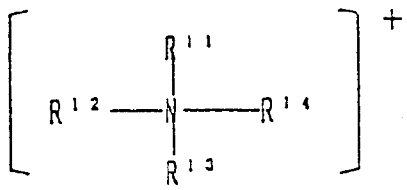

(IV-a)

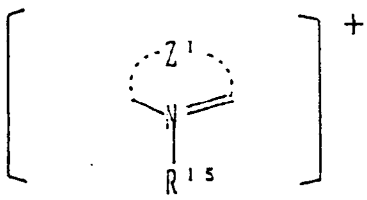

(IV-b)

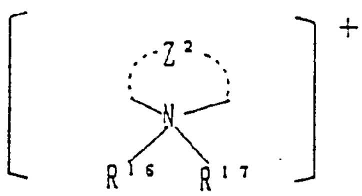

(IV-c)

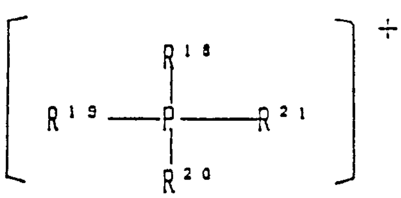

(IV-d)

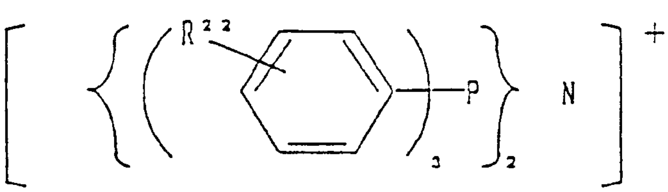

(IV-e)

dans lesquelles $R^{11}$, $R^{12}$, $R^{13}$, $R^{14}$, $R^{15}$, $R^{16}$, $R^{17}$, $R^{18}$, $R^{19}$, $R^{20}$, $R^{21}$ et $R^{22}$ représentent indépendamment des groupes alkyles en $C_1$-$C_{20}$ substitués ou non ou des groupes aryles en $C_6$-$C_{14}$ substitués ou non et $Z^1$ et $Z^2$ représentent indépendamment des groupes atomiques non métalliques qui forment avec l'atome d'azote dans chaque formule un noyau à 5 ou 6 chaînons.

**8.** Support d'enregistrement optique d'informations selon la revendication 7, dans lequel les substituants du groupe alkyle et du groupe aryle dans la définition de $R^{11}$ à $R^{22}$ sont indépendamment un groupe cyano, un groupe hydroxyle, un groupe alkyle en $C_1$-$C_{20}$, un groupe aryle en $C_6$-$C_{14}$, un groupe acyloxy en $C_2$-$C_{20}$, un groupe alcoxy en $C_1$-$C_6$, un groupe aryloxy, un groupe aralkyle, un groupe alcoxycarbonyle, un groupe aryloxycarbonyle, un groupe acyle, un groupe acylamino, un groupe carbamoyle substitué ou non, un groupe alkylsulfonylamino, un groupe arylsulfonylamino, un groupe alkylsulfamoyle, un groupe arylsulfamoyle, un groupe alkylsulfonyle ou un groupe arylsulfonyle.

**9.** Support d'enregistrement optique d'informations selon la revendication 7, dans lequel le noyau à 5 ou 6 chaînons dans la définition de $Z^1$ et $Z^2$ est un noyau pyridine, un noyau imidazole, un noyau pyrrole, un noyau 2-pyrroline, un noyau pyrrolidine, un noyau pipéridine, un noyau pyrazole, un noyau pyrazoline ou un noyau imidazoline.

**10.** Support d'enregistrement optique d'informations selon la revendication 4, dans lequel l'extincteur est choisi parmi les composés suivants :

(i) les bisdithio-α-dicétones de formule

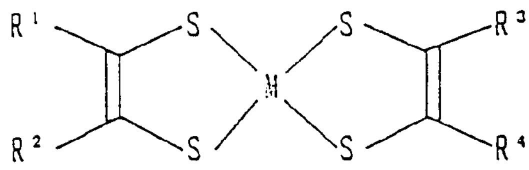

dans laquelle $R^1$ à $R^4$ représentent indépendamment un groupe alkyle ou un groupe aryle et M représente un atome de métal de transition divalent ;

(ii) les bisphényldithiols de formule :

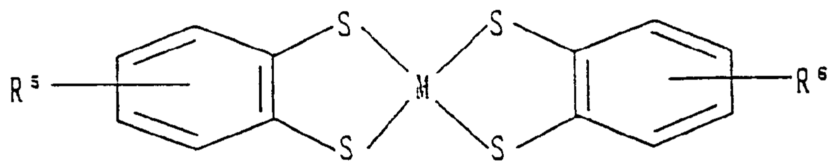

dans laquelle $R^5$ et $R^6$ représentent indépendamment un groupe alkyle ou un atome d'halogène et M représente un atome de métal de transition divalent ;

(iii) les chélates d'acétylacétonates ;
(iv) les chélates d'acides dithiocarbamiques;
(v) les biphénylethiols ;
(vi) les chélates de thiocatéchol;
(vii) les oximes de salicylaldéhyde ;
(viii) les chélates de thiobisphénolates ;
(ix) les chélates d'acide phosphoneux ;
(x) les benzoates ;
(xi) les amines à encombrement stérique ;
(xii) les sels de métaux de transition ;
(xiii) les composés d'aminium ou de diimonium de formule

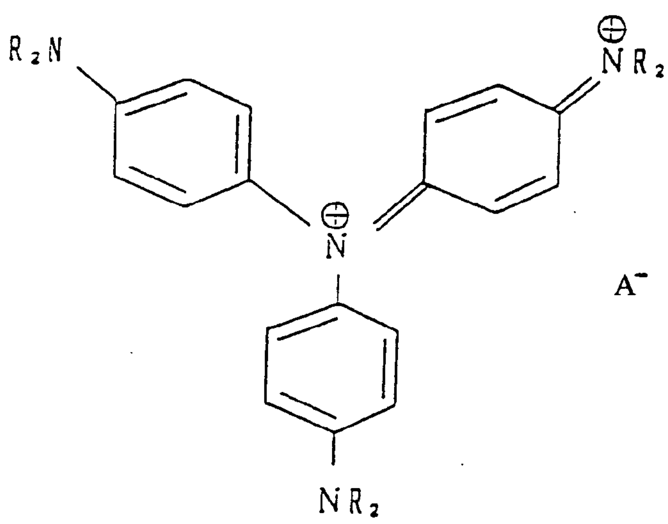

dans laquelle $R_2$ représente un groupe alkyle ou un groupe aryle et $A^-$ représente un anion.

**11.** Support d'enregistrement optique d'informations selon la revendication 4, dans lequel l'extincteur est utilisé en quantité de 0,05 à 12 moles pour 1 mole du composé de formule générale (I).

12. Support d'enregistrement optique d'informations selon la revendication 1, dans lequel une couche substratante est disposée sur le support, une couche protectrice sur la couche d'enregistrement en pellicule mince de colorant et/ou une couche réfléchissante sur le support ou sur la couche d'enregistrement.

13. Support d'enregistrement optique d'informations selon la revendication 4, dans lequel l'extincteur est contenu dans la couche d'enregistrement.

14. Support d'enregistrement optique d'informations selon la revendication 1, dans lequel le support est du verre ou une matière plastique.

15. Support d'enregistrement optique d'informations selon la revendication 1, qui comprend un liant en quantité de 0,01 à 2 fois le poids du composé de formule générale (I).

16. Support d'enregistrement optique d'informations selon la revendication 1, dans lequel l'épaisseur de pellicule de la couche d'enregistrement est de 0,01 à 2 μm.

17. Support d'enregistrement optique d'informations selon la revendication 1, dans lequel la réflectance en au moins un point de la région de longueurs d'onde de 750 à 850 nm est de 60 % ou plus.

18. Support d'enregistrement optique d'informations selon la revendication 1, qui a une couche d'enregistrement de colorant dans laquelle des signaux de format CD peuvent être enregistrés et/ou à partir de laquelle des signaux de format CD peuvent être lus.